# EUROPEAN PATENT SPECIFICATION

(11) **EP 0 217 955 B1**
(45) Date of publication and mention of the grant of the patent: **04.08.1993**
(21) Application number: 86900271.7
(22) Date of filing: 25.12.1985
(51) Int. Cl.: H04L 12/28, H04L 7/00

(54) **TRANSMITTING DATA PROCESSING SYSTEM**
SENDEDATENVERARBEITUNGSSYSTEM
SYSTEME DE TRAITEMENT DE DONNEES DE TRANSMISSION

(30) Priority: 27.12.1984 JP 280628/84
(43) Date of publication of application: 15.04.1987
(73) Proprietor: FUJITSU LIMITED, Kawasaki-shi, Kanagawa 211 (JP)
(72) Inventor: HIROME, Masashi, Setagaya-ku Tokyo 156 (JP); SHIKATA, Kiyotaka, Midori-ku, Yokohama-shi Kanagawa 227 (JP)
(74) Representative: Lehn, Werner, Dipl.-Ing.
(86) International application number: PCT/JP85/00713
(87) International publication number: WO 86/04203

(56) References cited:
- US-A- 4 099 024
- Patent Abstracts of Japan, vol. 8, no. 21, page (E-224)(1485), 28 January 1984 & JP, A, 58182342
- Patent Abstract of Japan, vol. 8, no. 167, page (E-258)(1604), 2 August 1984 & JP, A, 5963839
- New Electronic, vol. 17, no. 7, April 1984 (London, GB); L. Pittroff et al.: "Don't forget the physical layer", pages 37,39-41

## Description

The present invention relates to a data transmission system, and is applicable to a transmitting data processing system for transmitting data with a preamble pattern along a transmission line.

Patents Abstracts of Japan, volume 8, no. 21, page (E224) (1485), 28 January 1984 & JP-A-58 182 342 discloses a transmit data processing system for relaying transmit data with a preamble pattern through a plurality of nodes located along a transmission line, comprising: means for receiving a first frame comprising a first preamble pattern and transmit data arranged in the order of said first preamble pattern and said transmit data; means for extracting a clock signal from said first preamble pattern, thereby dissipating said first preamble pattern; means for producing said transmit data; means for supplementing said dissipated preamble pattern by adding a new preamble signal during a bit length substantially equal to said bit length of said dissipated pattern forming a created preamble pattern equal to the first preamble pattern; means for producing a created frame comprising said created preamble pattern and said transmit data arranged in the order of said created preamble pattern and said transit data; and means for sending said created frame from said node.

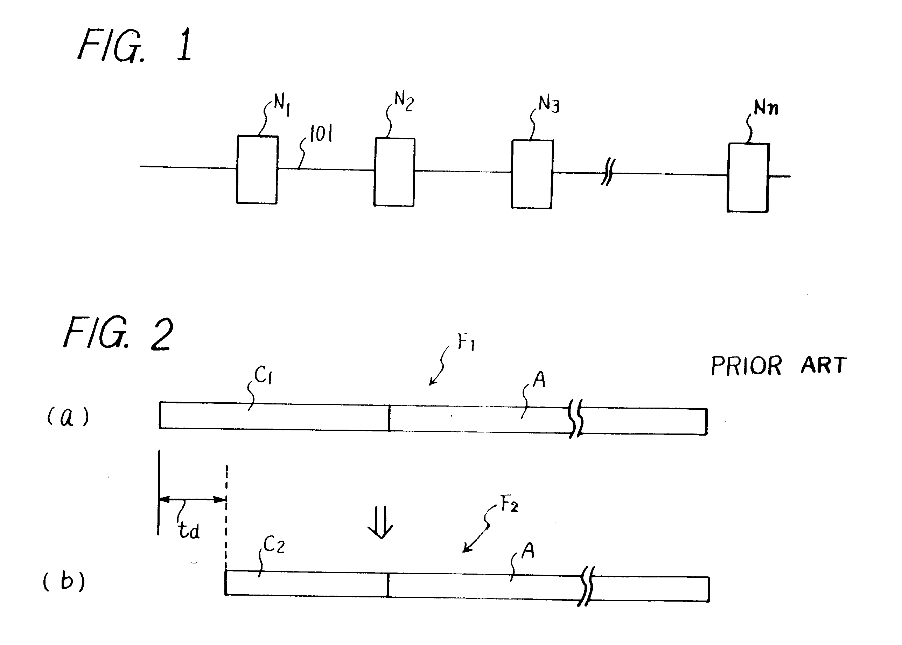

In a data transmission system like a local area network (LAN), a plurality of nodes are located along a transmission line as shown in Fig. 1. In Fig. 1, reference numeral 101 is a transmission line and reference symbols N₁, N₂, N₃, ---, and Nₙ are the nodes. A preamble pattern is added at the head of a frame (packet) for extracting a clock signal from it to relay the data through the nodes. The "node" herein means an apparatus having function of relaying the data to next node. The preamble pattern is defined in IEEE Standard (draft) 802.3.

According to the IEEE Standard 802.3, the frame consists of eight fields: a field of a preamble pattern, a field of a start field delimiter (SFD), a field of a destination address, a field of a source address, a field of indicating the length of the following field, a field of logical link control (LLC) data, and others. The fields are timely arranged in the order of the above description. The preamble pattern is always positioned at the head of the frame combined with the SFD pattern. The preamble pattern consists of seven octets (56 bits) each being like "10101010", and the SFD pattern consists of one octet (8 bits) being like "10101011" in which the last two bits "11" means that the preamble pattern is over and other data will follow after the two bits "11"; accordingly, in this disclosure, the frame will be divided into two fields for simplicity: a field of a preamble pattern consisting of eight octets (64 bits), in which each of first seven octets has bits like 10101010 and the last one octet nas bits like 10101011, and a field of transmitting data which includes the address patterns, the data to be sent, and others.

When a node receives a frame, a clock signal is extracted from a preamble pattern of the frame; the clock signal is used for reforming the received frame in the node and transmitting the reformed frame to another node. Because of the preamble pattern's character, a beginning part of the preamble pattern is dissipated while the clock signal is extracted from the preamble pattern; therefore, some bit length is necessary for the preamble pattern as the IEEE standard determined, and if the number of nodes increases, the bit-length of the preamble pattern must be more than 64 bits in an initial state. If the above was not considered, many parts of the preamble pattern would be dissipated, so that the clock signal could not be extracted any more or even a part of the transmitting data would be dissipated at the nodes near the end of the transmission line.

Recently, the LAN system has come to be used in a wide area, so that the transmission line is lengthened and the number of nodes increased; accordingly, the preamble pattern must have a long bit length to keep the IEEE standard at the nodes near from the end of the transmission line, which causes to pose a further problem that the data transmission efficiency will be decreased because each frame has on average a long preamble pattern. If the dissipated part is restored at each node, the problem can be solved and the serviceable area of the data transmission system can be extended.

The dissipation of the beginning part of the preamble pattern is shown in Fig. 2; Fig. 2(a) shows a frame F₁ which comes from node N₁ and is received at node N₂, assume that the frame F₁ is a standard preamble pattern hereinafter, and Fig. 2(b) shows a frame F₂ sent from node N₂ to node N₃. The frame F₁ is composed of a preamble pattern C₁ and transmitting data A, and a clock signal is extracted from preamble pattern C₁ at node N₂ wasting a time called as a delay time t_{d}, so that a beginning part of preamble pattern C₁ is dissipated at node N₂ producing preamble pattern C₂ whose bit-length is shorter than that of frame C₁ as much as delay time t_{d}. Therefore, when the frame is sent through a plurality of nodes, many parts of the preamble pattern will be dissipated, so that there is the possibility that the clock signal cannot be extracted any more at the succeeding nodes and sometimes even a beginning part of transmitting data A will be dissipated;
accordingly, a preamble pattern initially must have a long bit length as mentioned above.

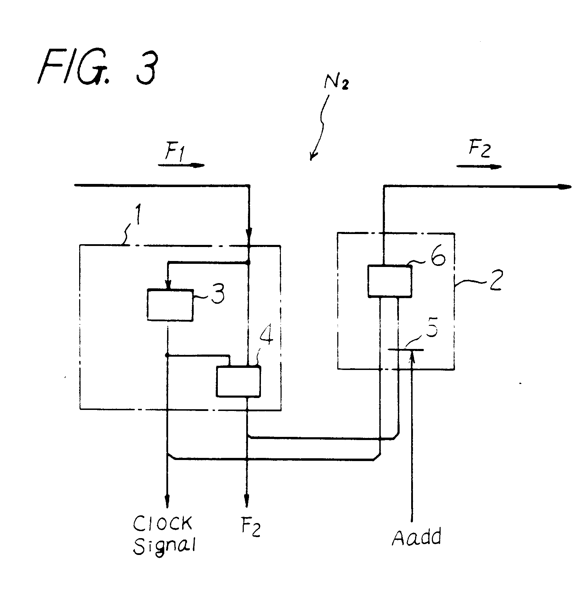

Fig. 3 shows a block diagram of the prior art transmitting data processing system. In Fig. 3, reference numeral 1 is a receiving unit which receives frame F₁ from node N₁ through the transmission line; reference numeral 2 is a transmitting unit from which frame F₂ is sent out to the transmission line. Reference numeral 3 is a clock extracting circuit in which a clock signal is extracted from preamble pattern C₁ of frame F₁. The frame F₁ is fed to a flip-flop circuit 4 and reformed to frame F₂ using the clock signal from clock extracting circuit 3. The bit-length of preamble pattern C₂ becomes shorter than that of preamble pattern C₁ because of the dissipation which occurs in extracting the clock signal from preamble pattern C₁. If frame F₁ is to be relayed to another node, the frame F₂ is fed to a flip-flop circuit 6 in transmitting unit 2 with the clock signal; the frame F₂ passes through a selector 5 in which additional data can be added to data A if it is necessary. If the destination of frame F₁ is node N₂ itself, the selector 5 rejects to pass transmitting data A, and data A and the clock signal are fed out to a node terminal which is not depicted in Fig. 3. Thus, in the prior art, each node dissipates a beginning part of preamble pattern, which causes to produce the problem of decreasing the data transmission efficiency as mentioned above.

An object of the present invention is to restore the dissipated preamble pattern to a normal preamble pattern at the node.

Another object of the present invention is to extend the serviceable area of the data transmission system under limitation that the bit-length of the preamble pattern should be more than a value.

Yet another object of the present invention is to increase the number of nodes used in the data transmission system under limitation that the bit-length of the preamble pattern should be more than a value.

A further object of the present invention is to increase the data transmitting efficiency of the data transmission system. According to the invention, there is provided a transmit data processing system for relaying transmit data with a preamble pattern through a plurality of nodes located along a transmission line, said transmit data processing system, in one of said nodes, comprising: means for receiving a first frame comprising a first preamble pattern and transmit data arranged in the order of said first preamble pattern and said transmit data; means for extracting a clock signal from said first preamble pattern, thereby dissipating a beginning part of said first preamble pattern; means for producing a second frame from said first frame using said clock signal, said second frame comprising a second preamble pattern and said transmit data arranged in the order of said second preamble pattern and said transmit data; means for storing said second preamble pattern and said transmit data, said second preamble pattern having a bit length shorter than a bit length of said first preamble pattern by substantially the length of said dissipated beginning part; means for supplementing said second preamble pattern by adding a preamble signal having a bit length substantially equal to said bit length of said dissipated beginning part, forming a created third preamble pattern substantially equal in length to the first preamble pattern; means for producing a restored frame comprising said created third preamble pattern and said transmit data arranged in the order of said created third preamble pattern and said transmit data; and means for sending said restored frame from said node.

For a better understanding of the invention and to show how the same may be carried into effect, reference will now be made, by way of example, to the accompanying drawings, in which:
Fig. 1 is a schematic illustration of a data transmission system;
Fig. 2(a) is an illustration of frame F₁ received at node N₁;
Fig. 2(b) is an illustration of frame F₂ obtained at node N₂ after extracting clock signal from frame F₁;
Fig. 3 is a block diagram of the prior art transmitting data processing system;
Fig. 4 is a block diagram of the first embodiment of the present invention;
Fig. 5(a) is a time chart for frame F₁;
Fig. 5(b) is a time chart for frame F₂;
Fig. 5(c) is a time chart for the clock extraction;
Fig. 5(d) is a time chart for a signal read out from the buffer memory;
Fig. 5(e) is a time chart for the generated preamble signal;
Fig. 5(f) is a time chart for the timing signal;
Fig. 5(g) is a time chart for frame F₃;
Fig. 6 is a block diagram of transmitting unit 1 in Fig. 4;
Fig. 7 is a time chart for explaining the function of Fig. 6;
Fig. 8 is a block diagram of the second embodiment of the present invention;
Fig. 9 is a block diagram of transmitting unit in Fig. 8;
Fig. 10(a) is a time chart for frame F₁;
Fig. 10(b) is a time chart for frame F₂;
Fig. 10(c) is a time chart for the 62-bit gate signal;
Fig. 10(d) is a time chart for the output of buffer memory 7;
Fig. 10(e) is a time chart for the prohibition signal;
Fig. 10(f) is a time chart for the newly generated preamble pattern; and
Fig. 10(g) is a time chart for frame F₃.

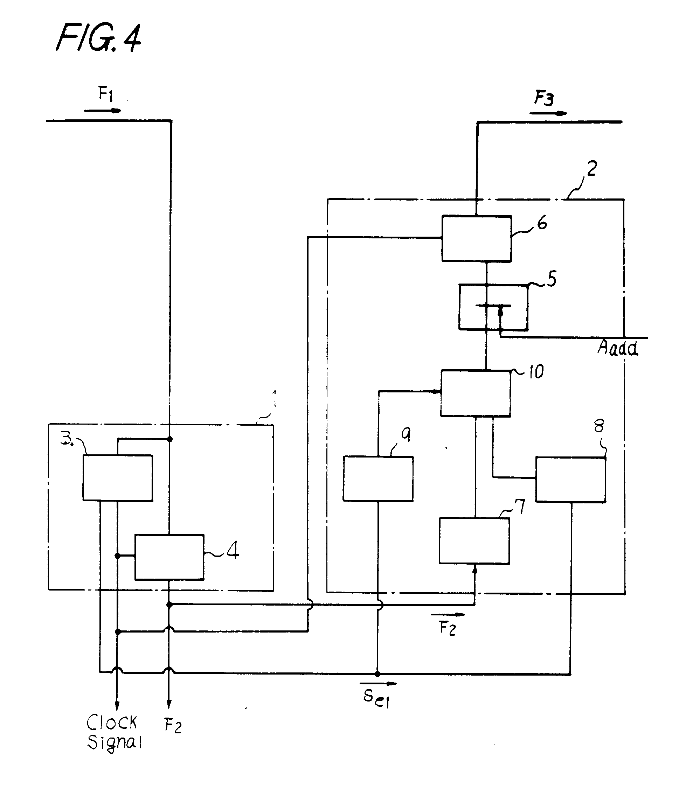

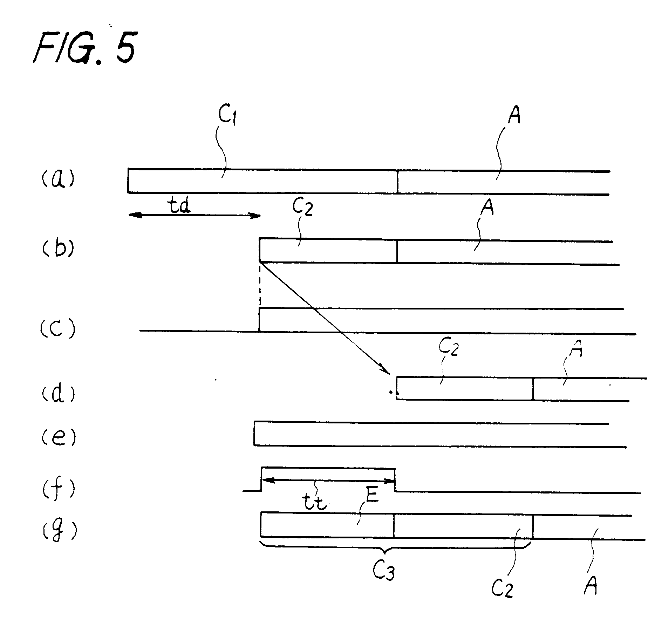

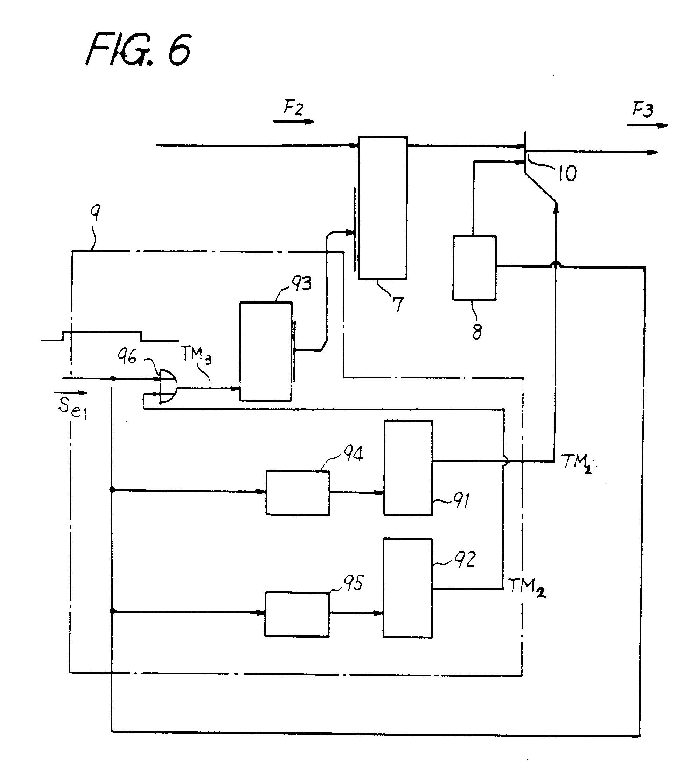

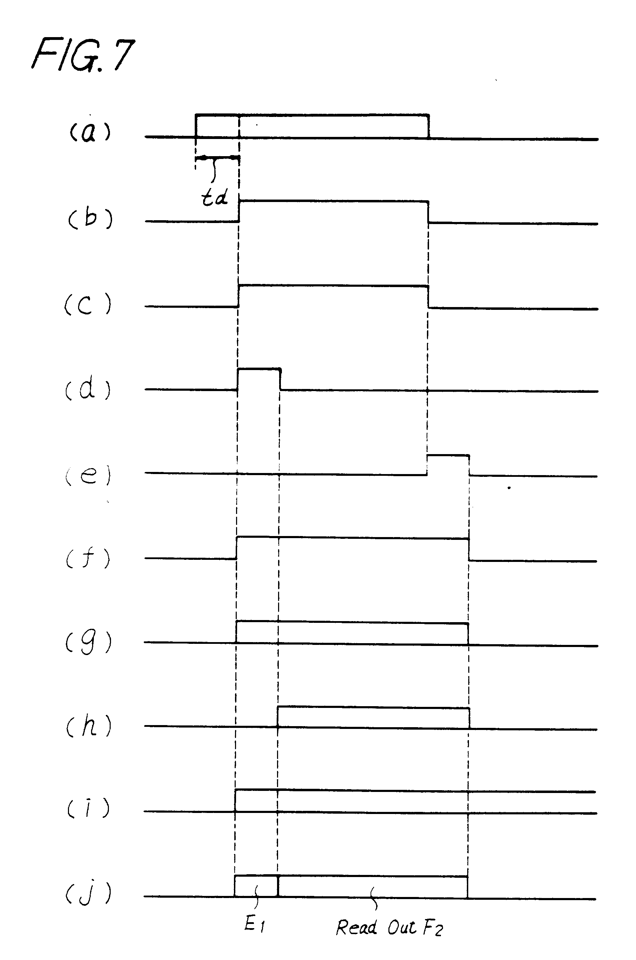

Fig. 4 is a block diagram of the transmitting data processing system firstly embodying the present invention; Fig. 5 is a time chart for explaining the function of Fig. 4; Fig. 6 is a block diagram of transmitting unit 1 in Fig. 4; and Fig. 7 is a time chart for explaining the function of Fig. 6.

In Fig. 4, the blocks having the same reference numerals as in Fig. 3 have the same function as in Fig. 3. Fig. 4 shows the block diagram in node N₂ for example; the block diagram is obtained by adding a buffer memory 7, a preamble pattern generator 8, a timing circuit 9, and a mixing circuit 10 to the block diagram of the prior art transmitting data processing system shown in Fig. 3.

When receiving unit 1 receives frame F₁, a clock signal is extracted from preamble pattern C₁ by clock extracting circuit 3; accordingly, when frame F₁ is reformed to frame F₂ in flip-flop circuit 4, the bit length of preamble pattern C₂ in frame F₂ becomes shorter than that of preamble pattern C₁; that is, a beginning part of preamble pattern C₁ is dissipated by extracting the clock signal from preamble pattern C₁ wasting delay time t_{d} as shown in Figs. 5(a) and 5(b). The frame F₂, reformed by flip-flop circuit 4, is once sent to buffer memory 7, and at the same time, an enable signal Sₑ₁ provided in clock extracting circuit 3 is sent to a timing circuit 9 and a preamble signal generator 8 in transmitting unit 2 as shown in Fig. 4. The enable signal Sₑ₁ is a signal for giving a positive proof of existing frame F₂ as long as the level of enable signal Sₑ₁ is, for example, high as shown in Fig. 5(c).

When preamble signal generator 8 receives enable signal Sₑ₁, a preamble signal is newly generated as shown in Fig. 5(e). In a mixing circuit 10, the data of frame F₂ stored in buffer memory 7 and a part of the newly generated preamble signal are combined under the control of timing circuit 9. In the data transmitting system, generally, the delay time t_{d} can be previously estimated, so that time duration tₜ, in which the generated new preamble signal is selected by mixing circuit 10, can be provided in timing circuit 9 so as to be substantially equal to delay time t_{d} as shown in Fig. 5(f). Therefore, if the stored data of frame F₂ are read out from buffer memory 7 just after timing duration tₜ is over, the dissipated part of the preamble pattern can be supplemented as shown in Fig. 5(g). Fig. 5(g) shows a frame F₃ which is an output frame from mixing circuit 10 and is to be sent out from transmitting unit 2; in frame F₃, reference symbol E is a newly added preamble signal which composes preamble pattern C₃ combined with preamble pattern C₂; preamble pattern C₂ and transmitting data A are what read out from buffer memory 7.

Fig. 6 shows a more detailed block diagram of transmitting unit 2, particularly a block diagram related to the timing operation for combining the newly generated preamble pattern with frame F₂. In Fig. 6, the blocks having the same reference numerals as in Fig. 4 have the same function as in Fig. 4. Fig. 7 is a time chart for explaining Fig. 6.

When frame F₂ arrives at buffer memory 7 as shown in Fig. 7(b), enable signal Sₑ₁, which is in a high (H) level as shown in Fig. 7(c), is simultaneously applied to an OR circuit 96, so that OR circuit 96 produces an H level signal for a timing signal TM₃ shown in Fig. 7(f); Fig. 7(a) shows frame F₁ for comparing with frame F₂ shown in Fig. 7(b); the timing signal TM₃ is applied to a counter 93 in which an access address signal shown in Fig. 7(g) is provided and sent to buffer memory 7. When buffer memory 7 receives the access address signal, the data are stored into and read out from buffer memory 7. The buffer memory 7 is a ring type, so that the data (frame F₂) stored therein are automatically read out after "one ring cycle" is over. In the embodiment, the period of the ring cycle is significant to determine the duration of adding the newly generated preamble signal for supplementing the dissipated part of the preamble pattern, which will be clear in following discussion. The period of the ring cycle generally relates to memory capacity, for example, when buffer memory 7 has memory capacity of one mega byte, the period becomes approximately 410 micro-sec.

The enable signal Sₑ₁ is also applied to the preamble signal generator 8, a counter 91 through a risen level detector 94, and a counter 92 through a fallen level detector 95. When enable signal Sₑ₁ is applied to preamble signal generator 8, a new preamble signal is generated as shown in Fig. 7(i) and a part (E₁) of it is applied to mixing circuit 10 only in the time duration of a timing signal TM₂ shown in Fig. 7(d). The timing signal TM₂ is provided as follows: when risen level detector 94 detects the risen level of enable signal Sₑ₁, counter 91 produces timing signal TM₂ and applies it to mixing circuit 10; the time duration of timing signal TM₂ is determined so as to be equal to the period of the ring cycle. Next, when fallen level detector 95 detects the fallen level of enable signal Sₑ₁, counter 92 produces a timing signal TM₁ shown in Fig. 7(e), and it is applied to OR circuit 96; the time duration of timing signal TM₁ is determined so as to be also equal to the period of the ring cycle. Accordingly, the time duration of timing signal TM₃ becomes equal to the sum of the time duration of timing signal TM₁ and enable signal Sₑ₁ as shown in Fig. 7(f), so that counter 93 produces an access address signal in time duration being equal to that of time duration TM₃, which means that the newly generated preamble signal is firstly applied to mixing circuit 10 from preamble signal generator 8, and the frame F₂'s data stored in buffer memory 7 are read out and applied in the time duration between point where timing signal TM₂ is over and point where timing signal TM₁ is over as shown in Fig. 7(h). Therefore, mixing circuit 10 produces frame F₃ as shown in Fig. 7(j). In Fig. 7(j), reference symbol E₁ is the part of the newly generated preamble signal which is added to read out frame F₂'s data.

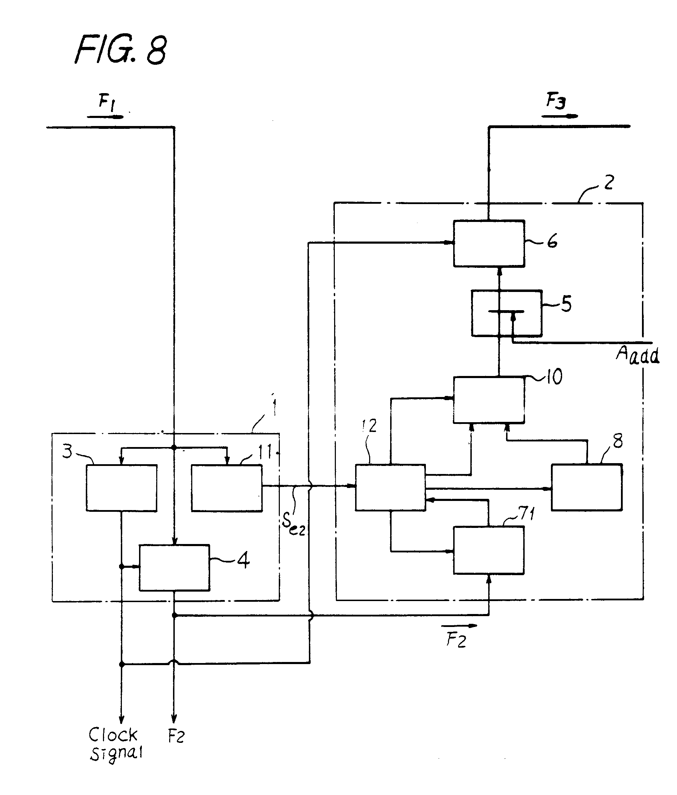

As can be seen in comparison between Figs. 7(a) and 7(j), according to the above embodiment, there is a time lag of delay time t_{d} between start point of frame F₁ and frame F₃, which causes to decrease the data transmission efficiency, and furthermore, the bit-length of preamble pattern C₃ is not exactly set so as to be equal to the bit-length (64 bits) following the IEEE standard. To improve the problem, another embodiment will be discussed referring to Figs. 8, 9, and 10.

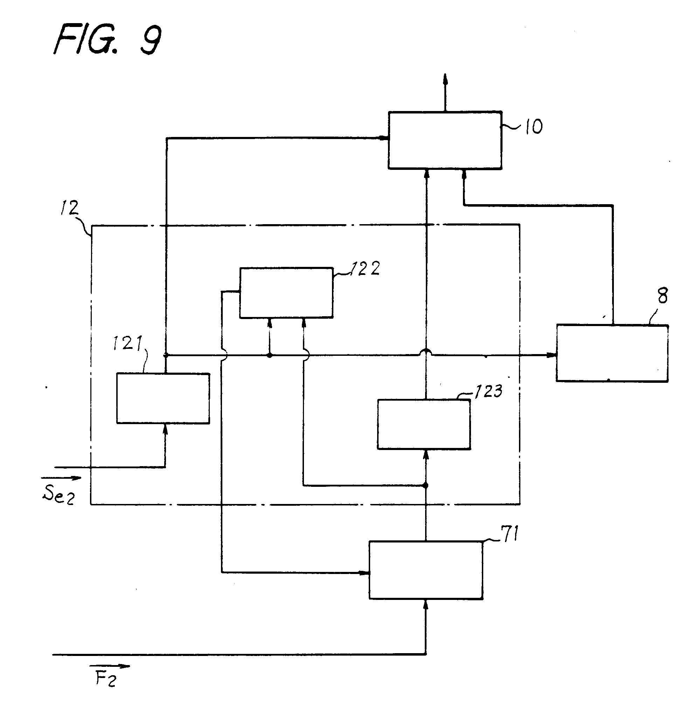

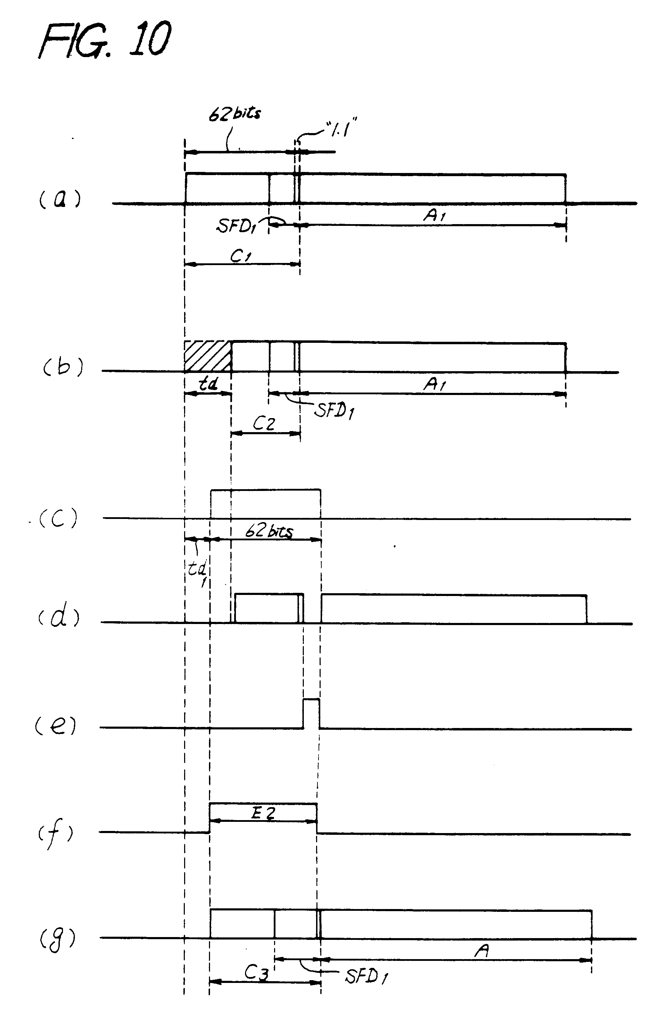

Fig. 8 is a block diagram of the transmitting data processing system secondly embodying the present invention; Fig. 9 is a block diagram in transmitting unit in Fig. 8; and Fig. 10 is a time chart for explaining the function of Fig. 9.

In Fig. 8, the blocks having the same reference numerals and symbols as in Fig. 4 have the same function as in Fig. 4. In this embodiment, a carrier sensor 11 is added in receiving unit 1 for sensing the carrier of deceiving frame F₁. When receiving unit 1 receives frame F₁, the carrier sensor 11 senses the carrier of receiving frame F₁ and produces an enable signal Sₑ₂ which is applied to timing circuit 12. Other circuits in receiving unit 2 in Fig. 8 function as follows: the clock extracting circuit 3 extracts the clock signal from preamble pattern C₁ of frame F₁ and applies the clock signal to flip-flop circuit 4 in which frame F₁ is reformed to frame F₂ which is applied to buffer memory 71.

There is the timing circuit 12 in transmitting unit 2 in Fig. 8; however, the function of timing circuit 12 is quite different from timing circuit 9 in Fig. 4 or 6. Fig. 9 is a block diagram of timing circuit 12 with other circuits related to timing circuit 12. In Fig. 9, the blocks having the same reference numerals and symbols as in Fig. 8 have the same function as in Fig. 8. The enable signal Sₑ₂ is fed to a 62-bit gate generator 121 in timing circuit 12; then 62-bit gate generator 121 produces a 62-bit gate signal having bit length of 62 bits; and the 62-bit gate signal is applied to following circuits: preamble signal generator 8, a 1,1-bit detector 122 in timing circuit 12, and mixing circuit 10. When preamble signal generator 8 receives the 62-bit gate signal, the preamble signal generator 8 produces a preamble pattern having the bit length of 62 bits like 10101010 --- 10 and applies it to mixing circuit 10. The buffer memory 71 is a first in first out (FIFO) type, and when buffer memory 71 stores frame F₂, the stored frame F₂ is simultaneously read out and applied to a 1,1-bit detector 122 and a 2-bit shift register 123. The 1,1-bit detector 122 detects bit signals "1,1" from read out frame F₂; the bit signals "1,1" are the last two bits of preamble pattern C₂ in frame F₂, and produces a prohibition signal to send to buffer memory 71. When buffer memory 71 receives the prohibition singal, buffer memory 71 stops reading operation. The 2-bit shift register 123 is for retaining the last two bits of its input and the last two bits correspond to bit signals "1,1" at this time. The 62-bit gate signal applied to mixing circuit 10 controls mixing circuit 10 so that only the 62-bit preamble pattern generated by preamble signal generator 8 is selected out and an output signal from 2-bit shift register 123 is selected out after the 62-bit gate signal is over. When the 62-bit gate signal applied to 1,1-bit detector 122 is over, the detector 122 controls buffer memory 71 so as to start to read out the rest of stored frame F₂, the rest is namely equal to transmitting data A in frame F₂; then, the read out output; that is, transmitting data A, from buffer memory 71 is sent to 2-bit shift register 123. Therefore, from 2-bit shift register 123, the remained bit signals "1,1" are first fed to mixing circuit 10 and then transmitting data A are fed to mixing circuit 10.

Fig. 10 is a time chart for explaining the above discussion. Fig. 10(a) shows frame F₁ received by receiving unit 1; the frame F₁ is a standard frame so that preamble pattern C₁ has 64 bits length which includes the SFD pattern in which 2 bits of "1,1" exist. Fig. 10(b) shows frame F₂ fed to buffer memory 71; the shadowed portion in Fig. 10(b) corresponds to the dissipated part of preamble pattern C₁; the bit length of the dissipated part is equal to time delay t_{d}. Fig. 10(c) shows 62-bit gate signal which is obtained by enable signal Sₑ₂; however, a time lag between the leading edges of the carrier of frame F₁ and enable signal Sₑ₂ occurs when carrier sensing circuit 11 produces enable signal Sₑ₂; therefore, there is a time delay t_{d1} between the leading edges of frame F₁ and the 62-bit gate signal as shown in Fig. 10(c); the amount of delay time t_{d1} is more than two bits but less than the amount of delay time t_{d}. Fig. 10(d) shows the output of buffer memory 71; each bit of the out put is read out from memory 71 in each case after that bit has been written into the memory 71; however, the read out operation stops temporarily when the bit signals "1,1" are detected by 1,1-bit detector 122 and the prohibition signal, which is shown in Fig. 10(e), is applied to buffer memory 71; buffer memory 71 starts to read out the stored data again when 62-bit bit gate signal is over. Fig. 10(f) shows a preamble pattern E₂ which is newly generated by preamble signal generator 8 when the 62-bit gate signal is input to preamble signal generator 8 as shown in Fig. 10(c). Fig. 10(g) shows frame F₃ which is produced from mixing circuit 10 by selecting the newly generated preamble pattern E₂ shown in Fig. 10(f), the bit signals "1,1" and transmitting data A are given from 2-bit shift register 123.

Comparing Fig. 10(g) with Fig. 5(g), delay time t_{d1} is less than delay time t_{d}; accordingly, the later embodiment is better than the former one as to the data transmitting efficiency. Furthermore, in the later embodiment, the preamble pattern (preamble pattern C₃) can be provided so as to be exactly equal to the amount of IEEE standard.

## Claims

1. A transmit data processing system for relaying transmit data with a preamble pattern through a plurality of nodes located along a transmission line, said transmit data processing system, in one of said nodes, comprising:
means (1) for receiving a first frame comprising a first preamble pattern and transmit data arranged in the order of said first preamble pattern and said transmit data;
means (3) for extracting a clock signal from said first preamble pattern, thereby dissipating a beginning part of said first preamble pattern;
means (7,8,9,10) for producing a second frame from said first frame using said clock signal, said second frame comprising a second preamble pattern and said transmit data arranged in the order of said second preamble pattern and said transmit data;
means (7) for storing said second preamble pattern and said transmit data, said second preamble pattern having a bit length shorter than a bit length of said first preamble pattern by substantially the length of said dissipated beginning part;
means (8,9,10) for supplementing said second preamble pattern by adding a preamble signal having a bit length substantially equal to said bit length of said dissipated beginning part, forming a created third preamble pattern substantially equal in length to the first preamble pattern;
means (10) for producing a restored frame comprising said created third preamble pattern and said transmit data arranged in the order of said created third preamble pattern and said transmit data; and
means (6) for sending said restored frame from said node.

2. A transmit data processing system according to claim 1, wherein said means for producing the restored frame comprises means for forming said restored frame to be identical to the first frame which restored frame comprises said created third preamble pattern and said transmit data.

3. A transmit data processing system according to claim 2, further comprising enable signal means (3) for producing an enable signal which provides proof of the presence of said second frame.

4. A transmit data processing system according to claim 3, wherein said means for supplementing said second preamble pattern and said means for producing said restored frame comprises:
a buffer memory (7), operatively connected to said means (1) for receiving, for storing said second frame and automatically reading out said stored second frame when a first period is over after said buffer memory has begun to store said second frame;
a preamble signal generator (8) for generating a generated preamble signal when said enable signal is applied thereto;
a mixing circuit (10), operatively connected to said preamble signal generator (8), said buffer memory (7) and said means for sending (6), for producing said restored frame by selecting said generated preamble signal and said stored second frame read out from said buffer memory; and
a timing circuit (9), operatively connected to said mixing circuit (10), for controlling said buffer memory (7) to store said second frame and said mixing circuit (10) to select said generated preamble signal during said first period.

5. A transmit data processing system according to claim 4, wherein said timing circuit (9) comprises:
a first counter (91), operatively connected to said enable signal means (3), for generating a first timing gate signal which controls said mixing circuit (10) to select said generated preamble signal, said first timing gate signal being generated after a leading edge of said enable signal is detected and has a time duration equal to said first period;
a second counter (92), operatively connected to said enable signal means (3), for generating a second timing gate signal, said second timing gate signal being generated after a trailing edge of said enable signal is detected and having a time duration equal to said first period;
an OR circuit (96), operatively connected to said enable signal means (3) and said second counter (92), for producing a third timing gate signal by receiving said first enable signal and said second timing gate signal, said third timing gate signal having a time duration equal to a sum of the time duration of said enable signal and said second timing gate signal; and
a third counter (93), operatively connected to said enable signal means (3) and said mixing circuit (10), for providing an access address signal to said buffer memory (7) upon receiving said third timing gate signal.

## Patentansprüche

1. Übertragungsdatenverarbeitungssystem zum Weiterschalten von Übertragungsdaten mit einem Präambelmuster durch eine Vielzahl von Knoten, die entlang einer Übertragungsleitung angeordnet sind, wobei das Übertragungsdatenverarbeitungssystem in einem der Knoten umfaßt:
Einrichtungen (1) zum Empfangen eines ersten Rahmens, der ein erstes Präambelmuster und Übertragungsdaten umfaßt, in der Reihenfolge erstes Präambelmuster und Übertragungsdaten;
Einrichtungen (3) zum Extrahieren eines Taktsignals aus dem ersten Präambelmuster, wodurch ein Anfangsteil des ersten Präambelmusters verloren geht;
Einrichtungen (7, 8, 9, 10) zum Erzeugen eines zweiten Rahmens von dem ersten Rahmen unter Verwendung des Taktsignals, wobei der zweite Rahmen ein zweites Präambelmuster und die Übertragungsdaten umfaßt, in der Reihenfolge zweites Präambelmuster und die Übertragungsdaten;
Einrichtungen (7) zum Speichern des zweiten Präambelmusters und der übertragungsdaten, wobei das zweite Präambelmuster eine um im wesentlichen die Länge des verloren gegangenen Anfangsteils kürzere Bitlänge als die Bitlänge des ersten Präambelmusters hat;
Einrichtungen (8, 9, 10) zum Ergänzen des zweiten Präambelmusters durch Hinzufügen eines Präambelsignals mit einer Bitlänge, die im wesentlichen gleich der Bitlänge des verloren gegangenen Anfangsteils ist, wodurch ein erzeugtes drittes Präambelmuster gebildet wird, welches im wesentlichen gleich lang ist wie das erste Präambelmuster;
Einrichtungen (10) zum Erzeugen eines wiederhergestellten Rahmens, welcher das erzeugte dritte Präambelmuster und die Übertragungsdaten in der Reihenfolge erzeugtes drittes Präambelmuster und die Übertragungsdaten umfaßt; und
Einrichtungen (6) zum Senden des wiederhergestellten Rahmens von dem Knoten.

2. Übertragungsdatenverarbeitungssystem nach Anspruch 1, dadurch gekennzeichnet, daß die Einrichtung zum Erzeugen des wiederhergestellten Rahmens Einrichtungen zum Bilden des wiederhergestellten Rahmens so umfaßt, daß er identisch mit dem ersten Rahmen ist, welcher wiederhergestellte Rahmen das erzeugte dritte Präambelmuster und die Übertragungsdaten umfaßt.

3. Übertragungsdatenverarbeitungssystem nach Anspruch 2, gekennzeichnet durch Aktiviersignaleinrichtungen (3) zum Erzeugen eines Aktiviersignales, welches einen Nachweis des Vorhandenseins des zweiten Rahmens bietet.

4. Übertragungsdatenverarbeitungssystem nach Anspruch 3, dadurch gekennzeichnet, daß die Einrichtungen zum Ergänzen des zweiten Präambelmusters und die Einrichtungen zum Erzeugen des wiederhergestellten Rahmens umfassen:
einen Pufferspeicher (7), welcher betriebsmäßig mit der Einrichtung (1) verbunden ist, um den zweiten Rahmen zu empfangen, zu speichern und automatisch den gespeicherten zweiten Rahmen auszulesen, wenn eine erste Periode vorüber ist, nachdem der Pufferspeicher begonnen hat, den zweiten Rahmen zu speichern;
einen Präambelsignalgenerator (8) zum Erzeugen eines erzeugten Präambelsignales, wenn das Aktiviersignal darauf gegeben wird;
einen Mischerschaltkreis (10), der betriebsmäßig mit dem Präambelsignalgenerator (8), dem Pufferspeicher (7) und der Einrichtung zum Senden (6) verbunden ist, zum Erzeugen des wiederhergestellten Rahmens durch Auswählen des erzeugten Präambelsignals und des aus dem Pufferspeicher ausgelesenen gespeicherten zweiten Rahmens; und
einen Zeitgeberschaltkreis (9), der betriebsmäßig mit dem Mischerschaltkreis (10) verbunden ist, um den Pufferspeicher (7) zu steuern, den zweiten Rahmen zu speichern, und den Mischerschaltkreis (10), das erzeugte Präambelsignal während der ersten Periode auszuwählen.

5. Übertragungsdatenverarbeitungssystem nach Anspruch 4, dadurch gekennzeichnet, daß der Zeitgeberschaltkreis (9) umfaßt:
einen ersten Zähler (91), der betriegsmäßig mit der Aktiviersignaleinrichtung (13) verbunden ist, um ein erstes Zeitgebertorsignal zu erzeugen, welches den Mischerschaltkreis (10) steuert, das erzeugte Präambelsignal auszuwählen, wobei das erste Zeitgebertorsignal erzeugt wird, nachdem eine vordere Flanke des Aktiviersignals erfaßt wird, und eine Zeitdauer gleich der ersten Periode hat;
einen zweiten Zähler (92), der betriebsmäßig mit der Aktiviersignaleinrichtung (3) verbunden ist, um ein zweites Zeitgebertorsignal zu erzeugen, wobei das zweite Zeitgebertorsignal erzeugt wird, nachdem eine hintere Flanke des Aktiviersignals erfaßt wird, und eine Zeitdauer gleich der ersten Periode hat;
einen ODER-Schaltkreis (96), der betriebsmäßig mit der Aktiviersigaleinrichtung (3) und dem zweiten Zähler (92) verbunden ist, um ein drittes Zeitgebertorsignal durch Empfangen des ersten Aktiviersignals und des zweiten Zeitgebertorsignales zu erzeugen, wobei das dritte Zeitgebertorsignal eine Zeitdauer gleich einer Summe der Zeitdauer des Aktiviersignales und des zweiten Zeitgebertorsignales hat; und
einen dritten Zähler (93), der betriebsmäßig mit der Aktiviersignaleinrichtung (3) und dem Mischerschaltkreis (10) verbunden ist, um ein Zugriffsadressensignal an den Pufferspeicher (7) auf den Empfang des dritten Zeitgebertorsignales hin zu liefern.

## Revendications

1. Système de traitement de données de transmission pour retransmettre des données de transmission avec un élément synchroniseur initial via une pluralité de noeuds situés sur une ligne de transmission, ledit système de traitement de données de transmission, dans un desdits noeuds, comprenant:
un dispositif (1) pour recevoir une première trame comportant un premier élément synchroniseur initial et des données de transmission transmises dans l'ordre suivant: ledit premier élément synchroniseur initial et lesdites données de transmission;
un dispositif (3) pour extraire un signal d'horloge dudit premier élément synchroniseur initial, dégradant ainsi une partie du début dudit premier élément synchroniseur initial;
un dispositif (7, 8, 9, 10) pour produire une seconde trame à partir de ladite première trame en utilisant ledit signal d'horloge, ladite seconde trame comportant un second élément synchroniseur initial et lesdites données de transmission transmises dans l'ordre suivant: ledit second élément synchroniseur initial et lesdites données de transmission;
un dispositif (7) pour stocker ledit second élément synchroniseur initial et lesdites données de transmission, ledit second élément synchroniseur initial ayant une longueur en nombre de bits plus courte que la longueur en nombre de bits dudit premier élément synchroniseur initial correspondant essentiellement à la longueur de la partie du début dégradée;
un dispositif (8, 9, 10) pour supplémenter ledit second élément synchroniseur initial en ajoutant un signal synchroniseur initial ayant une longueur en nombre de bits essentiellement égale à ladite longueur en nombre de bits de ladite partie du début dégradée, créant un troisième élément synchroniseur initial essentiellement égal à la longueur du premier élément synchroniseur initial;
un dispositif (10) pour produire une trame restaurée comprenant ledit troisième élément synchroniseur initial crée et lesdites données de transmission transmises dans l'ordre suivant: ledit troisième élément synchroniseur initial crée et lesdites données de transmission; et
un dispositif (6) pour transmettre ladite trame restaurée par ledit noeud.

2. Système de traitement de données de transmission selon la revendication 1, dans lequel ledit dispositif pour restaurer la trame comprend un dispositif pour restaurer ladite trame afin qu'elle soit identique à la première trame laquelle trame restaurée comprend ledit troisième élément synchroniseur initial crée et lesdites données de transmission.

3. Système de traitement de données de transmission selon la revendication 2, comprenant en outre un dispositif de signal de validation (3) pour produire un signal de validation qui fournit la preuve de la présence de ladite seconde trame.

4. Système de traitement de données de transmission selon la revendication 3, dans lequel ledit dispositif pour supplémenter ledit second élément synchroniseur initial et ledit dispositif pour restaurer ladite trame comprend:
une mémoire tampon (7), reliée fonctionnellement relié audit dispositif (1) pour recevoir, pour stocker ladite seconde trame et pour extraire automatiquement ladite seconde trame stockée lorsqu'une première période s'est écoulée après que ladite mémoire tampon a commencé à stocker ladite seconde trame;
un générateur de signal synchroniseur initial (8) pour générer un signal synchroniseur initial généré lorsque ledit signal de validation est appliqué à celui-ci;
un circuit mélangeur (10), relié fonctionnellement audit générateur de signal synchroniseur initial (8); à ladite mémoire tampon (7) et audit dispositif pour transmettre (6), pour restaurer ladite trame en sélectionnant ledit signal synchroniseur initial généré et ladite seconde trame stockée extraite de ladite mémoire tampon; et
un circuit de synchronisation (9) relié fonctionnellement audit circuit mélangeur (10), pour commander ladite mémoire tampon (7) pour stocker ladite seconde trame et audit circuit mélangeur (10) pour sélectionner ledit signal synchroniseur initial généré pendant ladite première période.

5. Système de traitement de données de transmission selon la revendication 4, dans lequel ledit circuit de synchronisation (9) comprend:
un premier compteur (91) relié fonctionnellement audit dispositif de signal de validation (3), pour générer un premier signal de porte de synchronisation, qui commande ledit circuit mélangeur (10), pour sélectionner ledit signal synchroniseur initial, ledit premier signal de porte de synchronisation étant généré après avoir détecté un front avant dudit signal de validation et ayant une durée égale à ladite première période;
un second compteur (92) relié fonctionnellement audit dispositif de signal de validation (3), pour générer un second signal de porte de synchronisation, ledit second signal de porte de synchronisation étant généré après avoir détecté un front arrière dudit signal de validation et ayant une durée égale à ladite première période;
Un circuit OU (96), relié fonctionnellement audit dispositif de signal de validation (3) et audit second compteur (92), pour produire un troisième signal de porte de synchronisation en recevant ledit premier signal de validation et ledit second signal de synchronisation, ledit troisième signal de porte de synchronisation ayant une durée égale à la somme des durées dudit signal de validation et dudit second signal de porte de synchronisation; et
un troisième compteur (93), relié fonctionnellement audit dispositif de signal de validation (3) et audit circuit mélangeur (10), pour fournir un signal d'adresse d'accès à ladite mémoire tampon (7) lors de la réception dudit troisième signal de porte de synchronisation.
